# EUROPEAN PATENT SPECIFICATION

(11) **EP 4 108 299 B1**
(45) Date of publication and mention of the grant of the patent: **29.04.2026**
(21) Application number: 22180123.6
(22) Date of filing: 21.06.2022
(51) Int. Cl.: A62C 2/24, A62C 3/08, A62C 2/14, B64D 45/00, B64D 11/02, A62C 2/18

(54) **SYSTEMS AND METHODS FOR SUPPRESSING FIRE IN A LAVATORY OF A VEHICLE**
SYSTEME UND VERFAHREN ZUR BRANDBEKÄMPFUNG IN EINER FAHRZEUGTOILETTE
SYSTÈMES ET PROCÉDÉS D'EXTINCTION D'INCENDIE DANS LES TOILETTES D'UN VÉHICULE

(30) Priority: 22.06.2021 US 202163213238 P
(43) Date of publication of application: 28.12.2022
(73) Proprietor: The Boeing Company, Arlington, VA 22202 (US)
(72) Inventor: McIntosh, Derren Carl, Mukilteo, WA (US)
(74) Representative: Hoffmann Eitle

(56) References cited:
- EP-A1- 3 643 612
- WO-A2-2004/053272
- US-A1- 2015 047 860
- ANONYMOUS: "Eutectic system", 27 May 2021 (2021-05-27), pages 1 - 5, XP093132335, Retrieved from the Internet <URL:https://en.wikipedia.org/w/index.php?title=Eutectic_system&oldid=1025465957> [retrieved on 20240216]

## Description

### FIELD OF THE DISCLOSURE

Examples of the present disclosure generally relate to systems and methods for suppressing fire in an enclosed space, such as within a lavatory within an internal cabin of a commercial aircraft.

### BACKGROUND OF THE DISCLOSURE

Commercial aircraft are used to transport passengers between various locations. A typical commercial aircraft includes one or more lavatories within an internal cabin.

Airline customers are increasingly requesting the use of lavatories to store excess bagged trash. Multiple bags of trash may be stowed in one or more lavatories when the internal cabin is being prepared for landing and the lavatories are locked and unused.

Certain regulations, such as promulgated by the U.S. Federal Aviation Administration (FAA), require lavatories within commercial aircraft to be able to contain a fire therein in less than 30 minutes. Indeed, the FAA has strict requirements in relation to such fire containment. Testing for such requirements typically includes ignition of multiple bags of trash (for example, four large bags of trash).

Further, certain regulations also require a lavatory door of a commercial aircraft to have an open grille in order to satisfy certain decompression requirements. The open grille also allows negative air flow pressure within the lavatory, to prevent odors escaping into the main cabin. The fire containment and the decompression requirements can conflict, as the open grille allows air to pass therethrough and potentially feed a fire, as demonstrated during certain tests. Known lavatory doors include grilles that are always open, and therefore create an uninterrupted flow of air into any fire within the lavatory.

US 2015/047860 A1, according to its abstract, concerns self-closing vent assemblies configured to provide ventilation during normal ambient conditions and to close during a fire. In one embodiment, the self-closing vent assembly includes a base vent plate having a plurality of apertures and a floating vent plate having a plurality of apertures offset from the apertures in the base vent plate. The floating vent plate is configured to move between a first position spaced apart by a distance from the base vent plate and a second position abutting the base vent plate.

WO 2004/053272 A2, according to its abstract, concerns a damper assembly having at least one damper blade that operates in a normally open position. A fusible link is connected to the damper blade to maintain the damper blade in the open position against a biasing force tending to close the damper blade. The fusible link fails upon an occurrence of a predetermined condition. A damper mechanism is provided including a locking mechanism linked to the damper blade that resists opening of the damper blade when the blade has closed due to failure of the fusible link.

### SUMMARY OF THE DISCLOSURE

A need exists for a system and method for effectively and efficiently suppressing fire within a lavatory of a commercial aircraft.

With that need in mind, a door configured to be coupled to an enclosed space within an internal cabin of a vehicle as recited in claim 1, a vehicle as recited in claim 3, and a method as recited in claim 6 are provided. Distinct embodiments are derivable from the dependent claims.

In at least one example, the temperature-responsive device includes a eutectic alloy fusible link.

### BRIEF DESCRIPTION OF THE DRAWINGS

Figure 1 illustrates a perspective front view of an aircraft, according to an example of the present disclosure.
Figure 2 illustrates a perspective internal view of a lavatory, according to an example of the present disclosure.
Figure 3 illustrates a schematic block diagram of a fire suppression system for a lavatory within an internal cabin of an aircraft, according to an example of the present disclosure.
Figure 4 illustrates a flow chart of a fire suppression method for a lavatory within an internal cabin of an aircraft, according to an example of the present disclosure.
Figure 5 illustrates an isometric front view of a door having a grille, according to an example of the present disclosure.
Figure 6 illustrates an isometric exploded view of a fire suppression system, according to an example of the present disclosure.
Figure 7 illustrates an isometric view of the fire suppression system of Figure 6.
Figure 8 illustrates a lateral view of the fire suppression system having the temperature-responsive device in a first state during normal operation, according to an example of the present disclosure.
Figure 9 illustrates a lateral view of the fire suppression system as a predetermined temperature threshold is reached, according to an example of the present disclosure.
Figure 10 illustrates a lateral view of the fire suppression system having the temperature-responsive device in a second state after the predetermined temperature threshold is reached, according to an example of the present disclosure.
Figure 11A illustrates an isometric view of a fire suppression system, according to an example of the present disclosure.
Figure 11B illustrates a top edge view of the fire suppression system of Figure 11A.
Figure 12 illustrates an isometric view of a door having the fire suppression system, according to an example of the present disclosure.
Figure 13 illustrates a lateral view of the fire suppression system having the temperature-responsive device in a first state during normal operation, according to an example of the present disclosure.
Figure 14 illustrates a lateral view of the fire suppression system as a predetermined temperature threshold is reached, according to an example of the present disclosure.
Figure 15 illustrates a lateral view of the fire suppression system having the temperature-responsive device in a second state after the predetermined temperature threshold is reached, according to an example of the present disclosure.
Figure 16 illustrates a lateral view of a fire suppression system (not in accordance with the appended claims) having the temperature-responsive device in a first state during normal operation.
Figure 17 illustrates a lateral view of the fire suppression system of Figure 16 as a predetermined temperature threshold is reached.
Figure 18 illustrates a lateral view of the fire suppression system of Figure 16 having the temperature-responsive device in a second state after the predetermined temperature threshold is reached.
Figure 19 illustrates a flow chart of a fire suppression method, according to an example of the present disclosure.

### DETAILED DESCRIPTION OF THE DISCLOSURE

The foregoing summary, as well as the following detailed description of certain examples will be better understood when read in conjunction with the appended drawings. As used herein, an element or step recited in the singular and preceded by the word "a" or "an" should be understood as not necessarily excluding the plural of the elements or steps. Further, references to "one example" are not intended to be interpreted as excluding the existence of additional examples that also incorporate the recited features. Moreover, unless explicitly stated to the contrary, examples "comprising" or "having" an element or a plurality of elements having a particular condition can include additional elements not having that condition.

Certain examples of the present disclosure provide a vehicle (such as a commercial aircraft) including an internal cabin. A lavatory is within the internal cabin. The lavatory includes a door having a grille and a fire suppression system coupled to the grille. The fire suppression system includes a first inner gate, a second inner gate coupled to the first inner gate to define an air channel therethrough, and a temperature-responsive device coupled to one or both of the first inner gate or the second inner gate. The temperature-responsive device is in a first state below a predetermined temperature threshold, and a second state above the predetermined temperature threshold. In the second state, the second inner gate is moved relative to the first inner gate to close the air channel.

As an example, the temperature-responsive device includes a eutectic alloy fusible link. As an example, the temperature-responsive device includes a button, and a thermoplastic pin extending into the button.

In at least one example, the first inner gate includes a fixed open frame, and the second inner gate includes a louver moveably coupled to the fixed open frame

Certain examples of the present disclosure provide an entry door for a lavatory of a commercial aircraft that includes a fire suppression system. In at least one example, the fire prevention system includes a louver, or gated system that allows two independent modes of operation specific to the aircraft. A first mode allows the lavatory door grille to permit airflow in a decompression event, while also allowing airflow to maintain negative air pressure within the lavatory. A second mode is configured to automatically change state in response to one or more circumstances (such as a predetermined temperature threshold or range). In particular, in the second mode, the louver or gate automatically closes to prevent airflow into the lavatory.

In at least one example, the fire suppression system includes a eutectic alloy fusible link that is configured to activate at a precise predetermined temperature threshold. For example, the link can be configured to meet the FAA requirement for 30 minute fire containment, which is unique to aircraft certification. In at least one example, the fire suppression system is configured to meet the unique requirements for airplane certification, such as with respect to flammability, air pressure differentials, a decompression event, temperature differentials in normal operation as well as during the event of a fire within the lavatory, vibration, reliability, endurance, abuse and fail safe, and the like. Optionally, the fire suppression system can be used on doors of various other enclosed spaces, whether in other vehicles or fixed structures.

In at least one example, the fire suppression system includes a gate/louver that is configured to close in response to a predetermined temperature being reached (such as via operation of the eutectic alloy fusible link), thereby suffocating a fire of airflow. When the temperature is lower than the predetermined temperature, gate/louver is in an open position, thereby addressing decompression and negative airflow requirements.

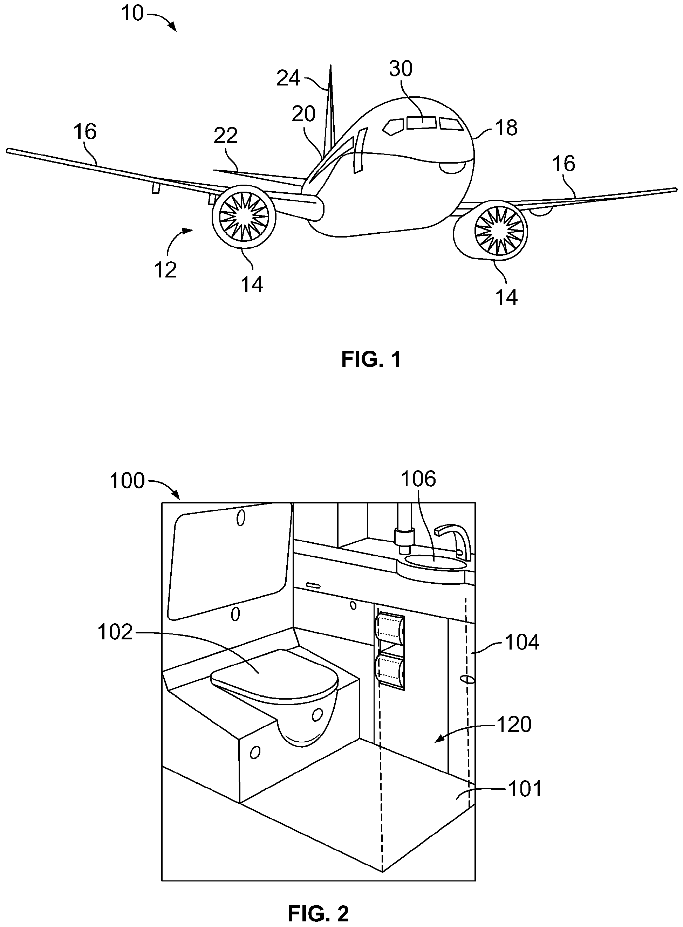

Figure 1 illustrates a perspective front view of an aircraft 10, according to an example of the present disclosure. The aircraft 10 includes a propulsion system 12 that includes engines 14, for example. Optionally, the propulsion system 12 may include more engines 14 than shown. The engines 14 are carried by wings 16 of the aircraft 10. In other examples, the engines 14 may be carried by a fuselage 18 and/or an empennage 20. The empennage 20 may also support horizontal stabilizers 22 and a vertical stabilizer 24.

The fuselage 18 of the aircraft 10 defines an internal cabin 30, which includes a flight deck or cockpit, one or more work sections (for example, galleys, personnel carry-on baggage areas, and the like), one or more passenger sections (for example, first class, business class, and coach sections), one or more lavatories, and/or the like. At least one of the lavatories within the internal cabin 30 includes a fire suppression system, as described herein.

Alternatively, instead of an aircraft, examples of the present disclosure may be used with various other vehicles, such as automobiles, buses, locomotives and train cars, watercraft, and the like. Further, examples of the present disclosure may be used with respect to fixed structures, such as commercial and residential buildings.

Figure 2 illustrates a perspective internal view of a lavatory 100, according to an example of the present disclosure. The lavatory 100 is an example of an enclosed space or chamber, such as within the internal cabin of the aircraft 10, shown in Figure 1. The lavatory 100 may be onboard an aircraft, as described above. Optionally, the lavatory 100 may be onboard various other vehicles. In other examples, the lavatory 100 may be within a fixed structure, such as a commercial or residential building. The lavatory 100 includes a base floor 101 that supports a toilet 102, cabinets 104, and a sink 106 or wash basin. The lavatory 100 may be arranged differently than shown. The lavatory 100 may include more or less components than shown.

The lavatory 100 also includes an entry door 120. As described herein, the door 120 includes a grille that includes a fire suppression system.

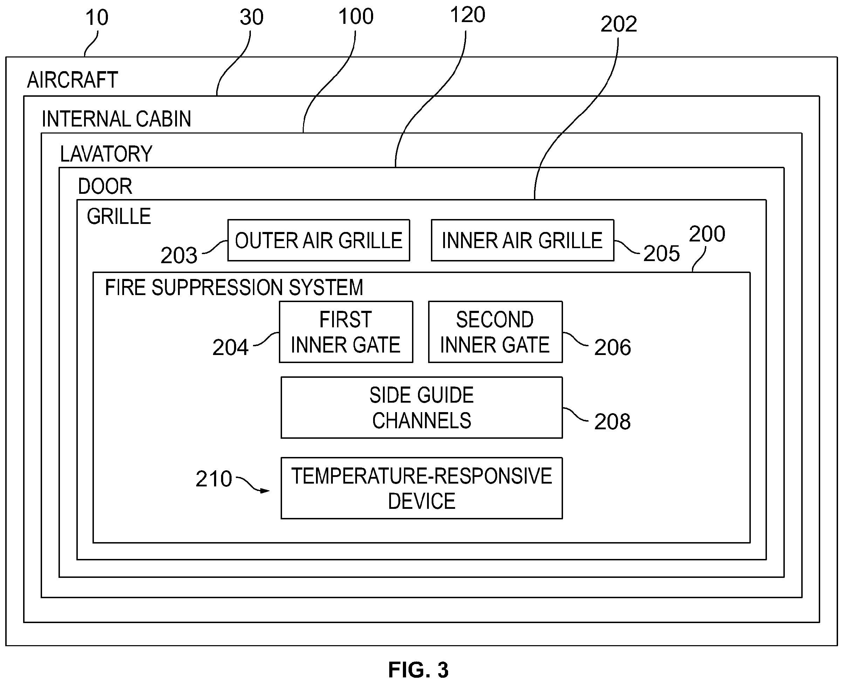

Figure 3 illustrates a schematic block diagram of a fire suppression system 200 for a lavatory 100 within an internal cabin 30 of an aircraft 10, according to an example of the present disclosure. The fire suppression system 200 is coupled to a grille assembly (or grille) 202 within a door (or panel) 120 of the lavatory 100. The grille 202 can include an outer air grille 203 and an inner air grille 205.

In at least one example, the door 120 can be manufactured having the fire suppression system 200. As another example, a grille of an existing door can be removed, and the door can be retrofit with the grille 202 having the fire suppression system 200.

The fire suppression system 200 includes a first inner gate 204 coupled to a second inner gate 206. For example, the first inner gate 204 is a fixed, stationary gate, and the second inner gate 206 is moveable in relation to the first inner gate 204. Optionally, the first inner gate 204 can be the moveable gate, and the second inner gate 206 can be the fixed, stationary gate. The fire suppression system 200 also includes side guide channels 208 (guide channels formed in lateral rails that support both of the first inner gate 204 and the second inner gate 206).

A temperature-responsive device 210 is coupled to one or both of the first inner gate 204 and/or the second inner gate 206. The temperature-responsive device 210 is configured to change states in response to a predetermined temperature being reached. In at least one example, the temperature-responsive device 210 is a eutectic alloy fusible link. The predetermined temperature can be a temperature at which fire ignites within the lavatory 100. For example, the predetermined temperature can be a temperature determined by the FAA in relation to one or more fire suppression regulations.

In operation, when the temperature within the lavatory 100 is below the predetermined temperature, the temperature-response device 210 is in a first state, and maintains the first gate 204 and the second gate 206 in an open position, such that one or more air channels are open therethrough and allow air to pass into the lavatory 100. In response to the predetermined temperature being reached (that is, a predetermined temperature threshold), the temperature-responsive device 210 automatically changes to a second state (such as by melting). In at least one example, the second inner gate 206 is moveably coupled to the temperature-responsive device 210. As the temperature-responsive device 210 changes to the second state, the second inner gate 206 moves in response thereto, thereby closing the one or more air channels, and preventing airflow into the lavatory 100.

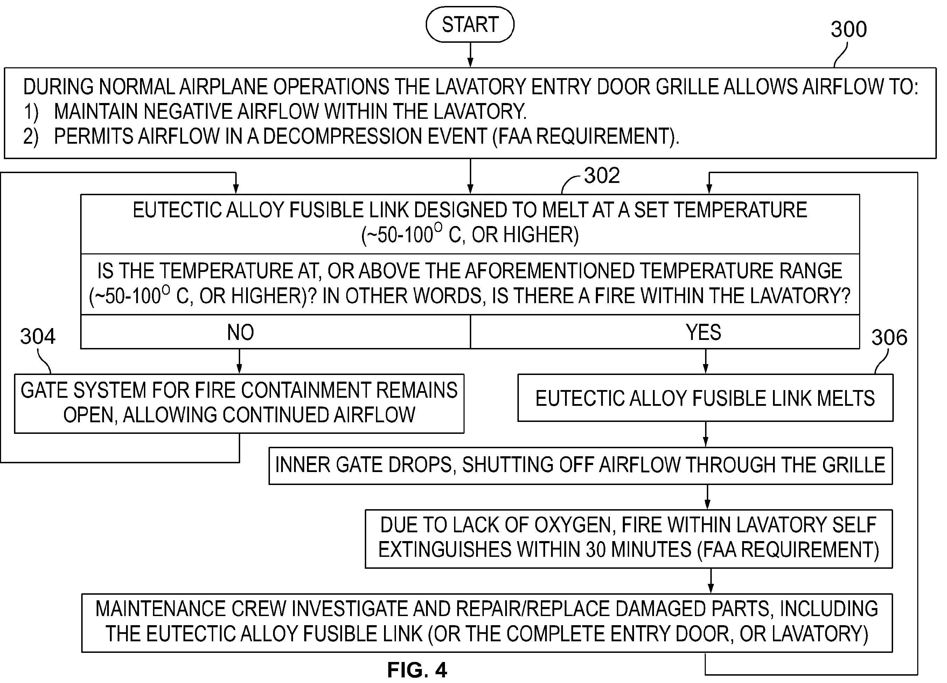

Figure 4 illustrates a flow chart of a fire suppression method for a lavatory within an internal cabin of an aircraft, according to an example of the present disclosure. Referring to Figures 3 and 4, at 300, during normal operations, the grille 202 allows airflow to maintain negative airflow within the lavatory and permit airflow in a decompression event. As such, the fire suppression system 200 within the grille 202 has the temperature-responsive device 210 in the first state, in which the first inner gate 204 and the second inner gate 206 are in an open position, such that one or more air channels pass therethrough.

At 302, in response to the predetermined temperature threshold being reached, the temperature-responsive device 210 transitions to the second state. For example, a eutectic alloy fusible link melts at the predetermined temperature threshold (for example, a temperature exceeding 50 degrees Celsius).

If the temperature has not reached the predetermined threshold, the fire suppression system 200 maintains the first inner gate 204 and the second inner gate 206 in the open position at 304. If, however, the temperature has reached the predetermined threshold, at 306, the temperature-responsive device 210 transitions to the second state (such as by melting), the second inner gate 206 drops, closes the air channel (thereby moving the gates 204 and 206 into a closed position), and thereby shuts off airflow through the grille 202.

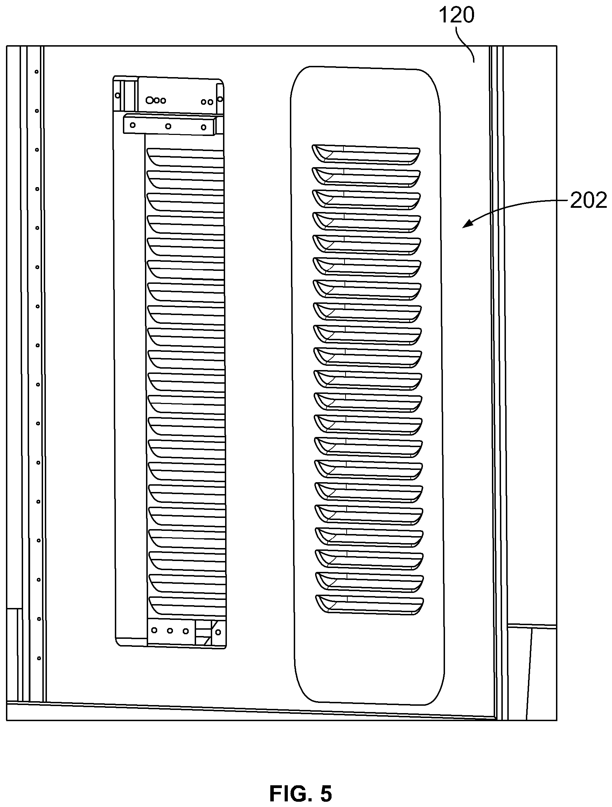

Figure 5 illustrates an isometric front view of a door 120 having a grille 202, according to an example of the present disclosure. The grille 202 includes a fire suppression system, as described herein. In at least one example, the door 120 is part of a lavatory, such as within an internal cabin of a vehicle (for example, a commercial aircraft).

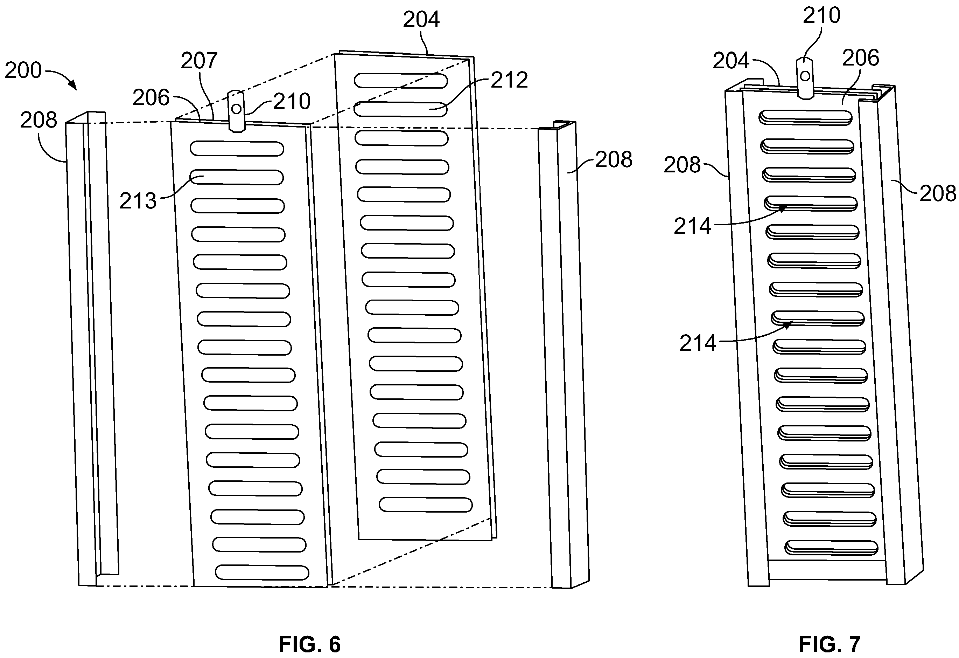

Figure 6 illustrates an isometric exploded view of a fire suppression system 200, according to an example of the present disclosure. Figure 7 illustrates an isometric view of the fire suppression system of Figure 6. Referring to Figures 6 and 7, the fire suppression system 200 includes the first inner gate 204, the second inner gate 206, the side guide channels 208, and the temperature-responsive device 210 (such as a eutectic fusible link) coupled to a fixed portion of the door (not shown in Figures 6 and 7) and the second inner gate 206, such as a top edge or portion 207 of the second inner gate 206. The first and second inner gates 204 and 206 include openings 212 (for example, first openings) and 213 (for example, second openings), respectively, that align to provide open air channels 214 that pass through the grille 202 when the temperature-responsive device 210 is in a first state (such as when the temperature is less than the predetermined temperature threshold).

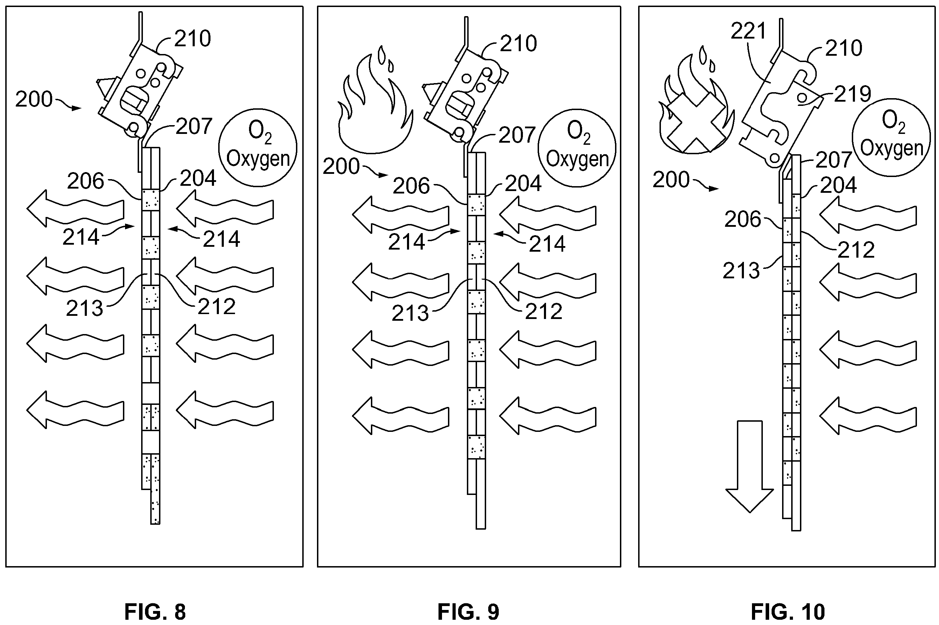

Figure 8 illustrates a lateral view of the fire suppression system 200 having the temperature-responsive device in a first state during normal operation, according to an example of the present disclosure. Figure 9 illustrates a lateral view of the fire suppression system 200 as a predetermined temperature threshold is reached. Figure 10 illustrates a lateral view of the fire suppression system 200 having the temperature-responsive device in a second state after the predetermined temperature threshold is reached.

As shown in Figure 10, when the temperature-responsive device 210 transitions to the second state (such as having at least one portion that melts), the second inner gate 206 shifts downwardly in relation to the first inner gate 204, thereby mis-aligning the openings 212 and 213, and closing the open air channels 214 (shown in Figures 8 and 9, but are blocked in Figure 10). For example, as the temperature-responsive device 210 transitions to the second state, a lower portion 219 of the temperature-responsive device 210 downwardly shifts in relation to a fixed upper portion 221, thereby forcing the second inner gate 206 downwardly, and mis-aligning the openings 212 and 213.

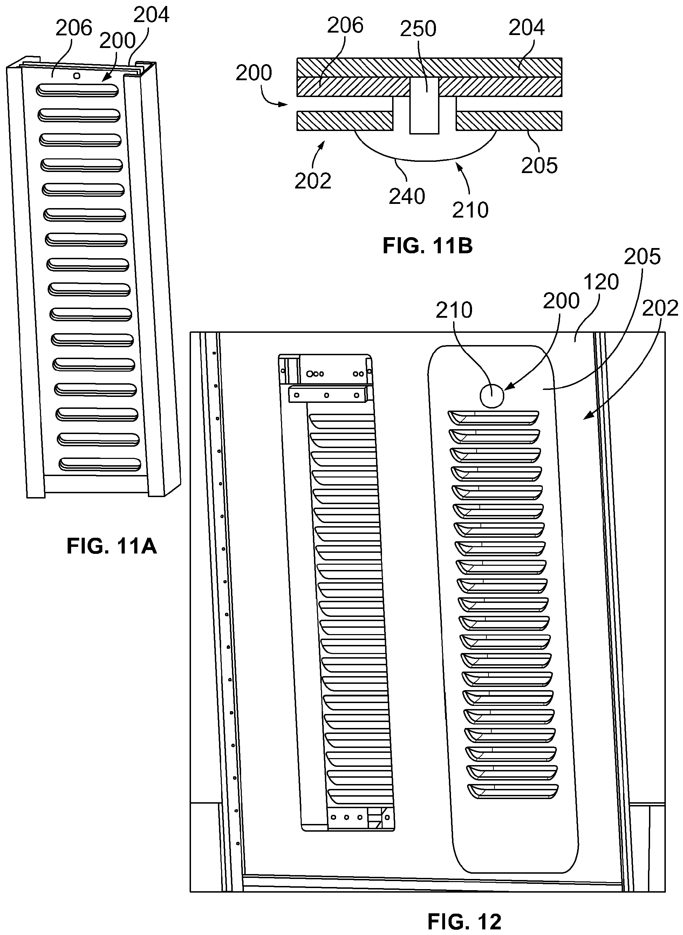

Figure 11A illustrates an isometric view of a fire suppression system 200, according to an example of the present disclosure. Figure 11B illustrates a top edge view of the fire suppression system 200 of Figure 11A. Figure 12 illustrates an isometric view of a door 120 having the fire suppression system 200, according to an example of the present disclosure.

Referring to Figures 11A, 11B, and 12, the temperature-responsive device 210 includes a button 240 (for example, a thermal conductive button, such as formed of copper, brass, or the like) secured to the grille 202 (such as the inner air grille 205 or optionally, the outer air grille 203), and a thermoplastic pin 250 extending into the button 240 and into the second inner gate 206. The pin 250 is configured to melt at the predetermined temperature threshold. When the pin 250 melts, the pin 250 disengages from the second inner gate 206 (for example, melts within and away from a retaining channel of the second inner gate 206). Consequently, the second inner gate 206 drops in relation to the first inner gate 204 to close off the open air channel.

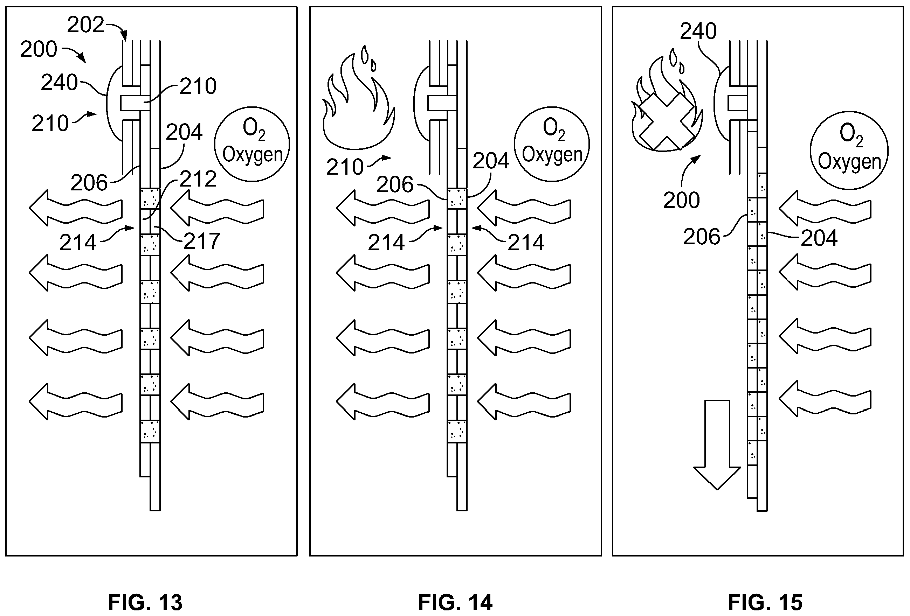

Figure 13 illustrates a lateral view of the fire suppression system 200 having the temperature-responsive device 210 in a first state during normal operation, according to an example of the present disclosure. Figure 14 illustrates a lateral view of the fire suppression system 200 as a predetermined temperature threshold is reached, according to an example of the present disclosure. Figure 15 illustrates a lateral view of the fire suppression system 200 having the temperature-responsive device 210 in a second state after the predetermined temperature threshold is reached.

In at least one example, the fire suppression system 200 can include the temperature-responsive device 210 shown and described with respect to Figures 6-10 and the temperature-responsive device 210 shown and described with respect to Figures 11A-15.

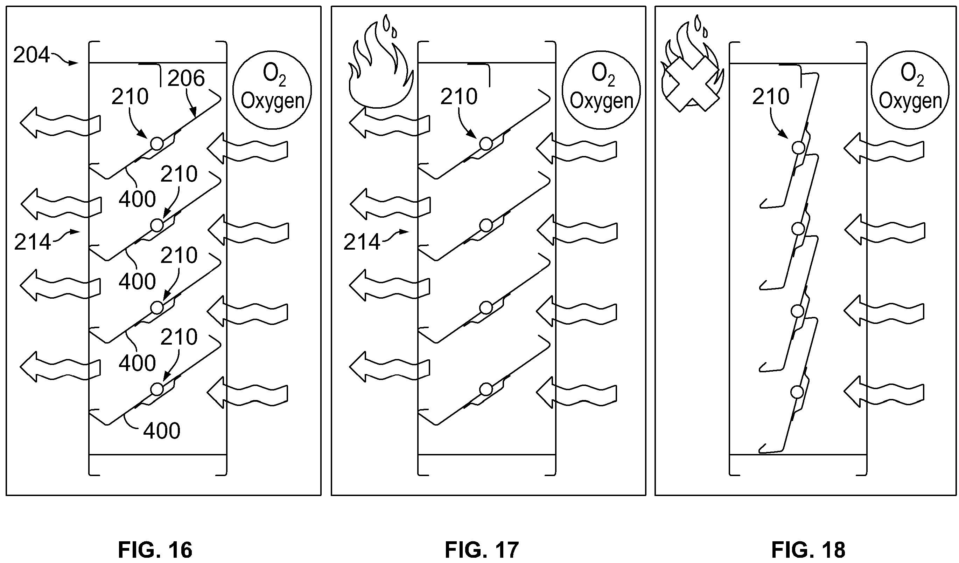

Figure 16 illustrates a lateral view of a fire suppression system 200 (not in accordance with the appended claims) having the temperature-responsive device 210 in a first state during normal operation. Figure 17 illustrates a lateral view of the fire suppression system 200 of Figure 16 as a predetermined temperature threshold is reached. Figure 18 illustrates a lateral view of the fire suppression system 200 of Figure 16 having the temperature-responsive device 210 in a second state after the predetermined temperature threshold is reached.

In the example shown in Figures 16-18, the first inner gate 204 can be a fixed open frame, and the second inner gate 206 can be a moveable louver secured inside the fixed open frame. The temperature-responsive device 210 (such as any of those described herein) is coupled to the moveable louver, such as via a spring-loaded or stored energy device. As shown in Figure 16, when the temperature-responsive device 210 is in the first state (below the predetermined temperature threshold), the panels of 400 the louver are oriented to form the air channels 214 through the fixed open frame and the louver. When the predetermined threshold is reached, the temperature-responsive device transitions to the second state, and, in response, the panels 400 of the louver move to close off the air channels 214, such that the louver is in the closed position shown in Figure 18.

As shown, the moveable louver can include one or more panels 400 coupled to one or more temperature-responsive devices 210. The fire suppression system 200 can include more or less panels 400 and temperature-responsive devices 210 than shown in Figures 16-18.

In at least one example, the fire suppression system 200 can include the temperature-responsive device 210 shown in Figures 16-18 and one or both of the temperature-responsive device 210 shown and described with respect to Figures 6-10 and/or the temperature-responsive device 210 shown and described with respect to Figures 11A-15.

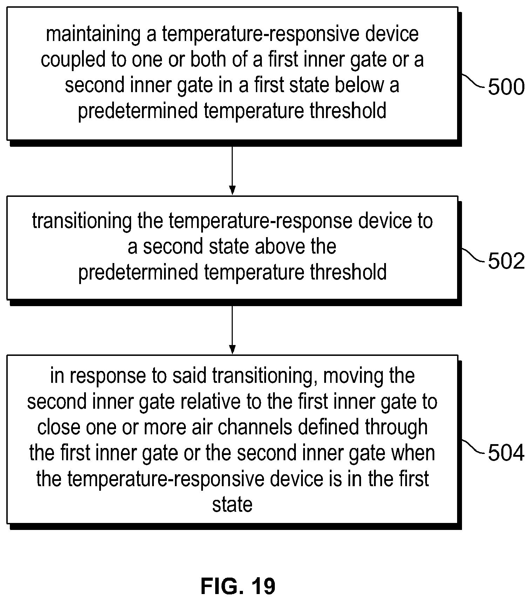

Figure 19 illustrates a flow chart of a fire suppression method, according to an example of the present disclosure. Referring to Figures 3 and 19, the fire suppression method includes maintaining 500 the temperature-responsive device 210 coupled to one or both of the first inner gate 204 or the second inner gate 206 in the first state below a predetermined temperature threshold; transitioning 502 the temperature-response device 210 to the second state above the predetermined temperature threshold; and in response to the transitioning 502, moving the second inner gate 206 relative to the first inner gate 204 to close one or more air channels 214 (shown in Figure 7, for example) defined through the first inner gate 204 or the second inner gate 206 when the temperature-responsive device 210 is in the first state.

As described herein, examples of the present disclosure provide systems and methods for effectively and efficiently suppressing fire, such as within a lavatory of a commercial aircraft.

While various spatial and directional terms, such as top, bottom, lower, mid, lateral, horizontal, vertical, front and the like can be used to describe examples of the present disclosure, it is understood that such terms are merely used with respect to the orientations shown in the drawings. The orientations can be inverted, rotated, or otherwise changed, such that an upper portion is a lower portion, and vice versa, horizontal becomes vertical, and the like.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

It is to be understood that the above description is intended to be illustrative, and not restrictive. For example, the above-described examples (and/or aspects thereof) can be used in combination with each other. In addition, many modifications can be made to adapt a particular situation or material to the teachings of the various examples of the disclosure without departing from their scope. While the dimensions and types of materials described herein are intended to define the parameters of the various examples of the disclosure, the examples are by no means limiting and are exemplary examples. Many other examples will be apparent to those of skill in the art upon reviewing the above description. The scope of the various examples of the disclosure should, therefore, be determined with reference to the appended claims. In the appended claims and the detailed description herein, the terms "including" and "in which" are used as the plain-English equivalents of the respective terms "comprising" and "wherein." Moreover, the terms "first," "second," and "third," etc. are used merely as labels, and are not intended to impose numerical requirements on their objects.

This written description uses examples to disclose the various examples of the disclosure, including the best mode, and also to enable any person skilled in the art to practice the various examples of the disclosure, including making and using any devices or systems and performing any incorporated methods. The patentable scope of the various examples of the disclosure is defined by the claims, and can include other examples that occur to those skilled in the art. Such other examples are intended to be within the scope of the claims if the examples have structural elements that do not differ from the literal language of the claims, or if the examples include equivalent structural elements with insubstantial differences from the literal language of the claims.

## Claims

1. A door (120) configured to be coupled to an enclosed space within an internal cabin of a vehicle, the door (120) having a grille (202) and a fire suppression system (200) coupled to the grille (202),
the fire suppression system (200) comprising:
a first inner gate (204);
a second inner gate (206) coupled to the first inner gate (204), wherein the first inner gate (204) is a fixed, stationary gate; the second inner gate (206) is arranged so as to be moveable in relation to the first inner gate (204); and the first and second inner gates (204, 206) include openings (212, 213) that align to define one or more air channels (214) therethrough;
side guide channels (208) formed in lateral rails that support both of the first inner gate (204) and the second inner gate (206); and
a temperature-responsive device (210) coupled to one or both of the first inner gate (204) or the second inner gate (206),
wherein the temperature-responsive device (210) is configured to be in a first state below a predetermined temperature threshold, and a second state above the predetermined temperature threshold,
wherein the temperature-responsive device (210) comprises a conductive button (240) secured to the grille (202) and a thermoplastic pin (250) extending into the conductive button (240) and the second inner gate (206), the thermoplastic pin (250) being configured to melt at the predetermined temperature threshold, and
wherein the temperature-responsive device (210) is configured so that when the temperature-response device (210) is in the first state, the temperature-responsive device (210) maintains the first gate (204) and the second gate (206) in an open position to provide the one or more air channels (214), and as the temperature-responsive device (210) changes to the second state, the second inner gate (206) drops in relation to the first inner gate (204) to mis-align the openings (212, 213) and close the one or more air channels (214).

2. The door (120) of claim 1, wherein the temperature-responsive device (210) comprises a eutectic alloy fusible link.

3. A vehicle comprising:
an internal cabin; and
an enclosed space within the internal cabin, the enclosed space including a door (120) according to claim 1 or 2.

4. The vehicle of claim 3, wherein the vehicle is an aircraft (10).

5. The vehicle of claim 3 or 4, wherein the enclosed space is a lavatory (100).

6. A method for suppressing fire in an enclosed space within an internal cabin of a vehicle, the enclosed space including a door (120) having a grille (202) and a fire suppression system (200) coupled to the grille (202),
the fire suppression system (200) comprising a first inner gate (204) and a second inner gate (206) coupled to the first inner gate (204), wherein the first inner gate (204) is a fixed, stationary gate; the second inner gate (206) is arranged so as to be moveable in relation to the first inner gate (204); and the first and second inner gates (204, 206) include openings (212, 213) that align to define one or more air channels (214) therethrough;
the fire suppression system (200) further comprising side guide channels (208) formed in lateral rails that support both of the first inner gate (204) and the second inner gate (206); and
the method comprising:
maintaining a temperature-responsive device (210) in a first state below a predetermined temperature threshold, wherein the second inner gate (206) is moveably coupled to the temperature-responsive device (210);
transitioning the temperature-response device (210) to a second state above the predetermined temperature threshold; and
in response to said transitioning, allowing the second inner gate (206) to drop in relation to the first inner gate (204) to mis-align the openings (212, 213) and close one or more air channels (214) defined through the first inner gate (203) or the second inner gate (206) when the temperature-responsive device (210) is in the first state,
wherein the temperature-responsive device (210) comprises a conductive button (240) secured to the grille (202) and a thermoplastic pin (250) extending into the conductive button (240) and the second inner gate (206), the thermoplastic pin (250) being configured to melt at the predetermined temperature threshold.

7. The fire suppression method of claim 6, wherein a lavatory (100) includes the door (120).

8. The fire suppression method of claim 6 or 7, wherein the temperature-responsive device (210) comprises a eutectic alloy fusible link.

## Patentansprüche

1. Tür (120), die ausgebildet ist, um an einen umschlossenen Raum innerhalb einer Innenkabine eines Fahrzeugs gekoppelt zu werden, wobei die Tür (120) ein Lüftungsgitter (202) und ein an das Lüftungsgitter (202) gekoppeltes Brandbekämpfungssystem (200) aufweist,
wobei das Brandbekämpfungssystem (200) Folgendes umfasst:
eine erste Innenklappe (204);
eine zweite Innenklappe (206), die an die erste Innenklappe (204) gekoppelt ist, wobei die erste Innenklappe (204) eine feste, stationäre Innenklappe ist; die zweite Innenklappe (206) so angeordnet ist, dass sie relativ zu der ersten Innenklappe (204) beweglich ist; und die erste Innenklappe und die zweite Innenklappe (204, 206) Öffnungen (212, 213) einschließen, die ausgerichtet sind, um einen oder mehrere Luftkanäle (214) hindurch zu definieren;
seitliche Führungskanäle (208), die in Seitenschienen gebildet sind, die sowohl die erste Innenklappe (204) als auch die zweite Innenklappe (206) abstützen; und,
eine temperaturansprechende Vorrichtung (210), die an eine oder beide der ersten Innenklappe (204) oder der zweiten Innenklappe (206) gekoppelt ist,
wobei die temperaturansprechende Vorrichtung (210) ausgebildet ist, in einem ersten Zustand unterhalb eines vorgegebenen Temperaturschwellenwerts und in einem zweiten Zustand oberhalb des vorgegebenen Temperaturschwellenwerts zu sein,
wobei die temperaturansprechende Vorrichtung (210) einen leitfähigen Knopf (240), der an dem Lüftungsgitter (202) befestigt ist, und einen thermoplastischen Stift (250) umfasst, der in den leitfähigen Knopf (240) und die zweite Innenklappe (206) hineinragt, wobei der thermoplastische Stift (250) ausgebildet ist, bei dem vorgegebenen Temperaturschwellenwert zu schmelzen, und
wobei die temperaturansprechende Vorrichtung (210) so ausgebildet ist, dass, wenn die temperaturansprechende Vorrichtung (210) in dem ersten Zustand ist, die temperaturansprechende Vorrichtung (210) die erste Innenklappe (204) und die zweite Innenklappe (206) in einer Offenstellung hält, um einen oder mehrere Luftkanäle (214) bereitzustellen, und wenn die temperaturansprechende Vorrichtung (210) sich in den zweiten Zustand ändert, fällt die zweite Innenklappe (206) relativ zu der ersten Innenklappe (204) ab, um die Öffnungen (212, 213) fehl auszurichten und einen oder mehrere Luftkanäle (214) zu schließen.

2. Tür (120) nach Anspruch 1, wobei die temperaturansprechende Vorrichtung (210) ein Schmelzglied aus eutektischer Legierung umfasst.

3. Fahrzeug, umfassend:
eine Innenkabine; und
einen umschlossenen Raum innerhalb der Innenkabine, wobei der umschlossene Raum eine Tür (120) nach Anspruch 1 oder 2 einschließt.

4. Fahrzeug nach Anspruch 3, wobei das Fahrzeug ein Luftfahrzeug (10) ist.

5. Fahrzeug nach Anspruch 3 oder 4, wobei der umschlossene Raum eine Toilette (100) ist.

6. Verfahren zur Brandbekämpfung in einem umschlossenen Raum innerhalb einer Innenkabine eines Fahrzeugs, wobei der umschlossene Raum eine mit einem Lüftungsgitter (202) und einem an das Lüftungsgitter (202) gekoppelten Brandbekämpfungssystem (200) aufweisende Tür (120) einschließt,
wobei das Brandbekämpfungssystem (200) eine erste Innenklappe (204) und eine zweite Innenklappe (206), die an die erste Innenklappe (204) gekoppelt ist, umfasst, wobei die erste Innenklappe (204) eine feste, stationäre Innenklappe ist; die zweite Innenklappe (206) so angeordnet ist, dass sie relativ zu der ersten Innenklappe (204) beweglich ist; und die erste Innenklappe und die zweite Innenklappe (204, 206) Öffnungen (212, 213) einschließen, die ausgerichtet sind, um einen oder mehrere Luftkanäle (214) hindurch zu definieren;
wobei das Brandbekämpfungssystem (200) weiter seitliche Führungskanäle (208) umfasst, die in Seitenschienen gebildet sind, die sowohl die erste Innenklappe (204) als auch die zweite Innenklappe (206) abstützen; und,
wobei das Verfahren Folgendes umfasst:
Aufrechterhalten einer temperaturansprechenden Vorrichtung (210) in einem ersten Zustand unterhalb eines vorgegebenen Temperaturschwellenwerts, wobei die zweite Innenklappe (206) beweglich an die temperaturansprechende Vorrichtung (210) gekoppelt ist;
Überführen der temperaturansprechenden Vorrichtung (210) in einen zweiten Zustand oberhalb des vorgegebenen Temperaturschwellenwerts; und,
als Reaktion auf das genannte Überführen, Zulassen, dass die zweite Innenklappe (206) relativ zu der ersten Innenklappe (204) abfällt, um die Öffnungen (212, 213) fehl auszurichten und einen oder mehrere Luftkanäle (214) zu schließen, die durch die erste Innenklappe (203) oder die zweite Innenklappe (206) definiert sind, wenn die temperaturansprechende Vorrichtung (210) sich in dem ersten Zustand befindet,
wobei die temperaturansprechende Vorrichtung (210) einen leitfähigen Knopf (240), der an dem Lüftungsgitter (202) befestigt ist, und einen thermoplastischen Stift (250), der in den leitfähigen Knopf (240) und die zweite Innenklappe (206) hineinragt, umfasst, wobei der thermoplastische Stift (250) ausgebildet ist, bei dem vorgegebenen Temperaturschwellenwert zu schmelzen.

7. Brandbekämpfungsverfahren nach Anspruch 6, wobei eine Toilette (100) die Tür (120) einschließt.

8. Brandbekämpfungsverfahren nach Anspruch 6 oder 7, wobei die temperaturansprechende Vorrichtung (210) ein Schmelzglied aus eutektischer Legierung umfasst.

## Revendications

1. Porte (120) configurée pour être couplée à un espace clos à l'intérieur d'une cabine interne d'un véhicule, la porte (120) présentant une grille (202) et un système d'extinction d'incendie (200) couplé à la grille (202),
le système d'extinction d'incendie (200) comprenant :
une première porte intérieure (204) ;
une deuxième porte intérieure (206) couplée à la première porte intérieure (204), dans laquelle la première porte intérieure (204) est une porte fixe et immobile ; la deuxième porte intérieure (206) est agencée de manière à être déplaçable par rapport à la première porte intérieure (204) ; et les première et deuxième portes intérieures (204, 206) incluent des ouvertures (212, 213) qui s'alignent pour définir un ou plusieurs canaux d'air (214) à travers celles-ci ;
des canaux de guidage latéraux (208) formés dans des rails latéraux qui supportent à la fois la première porte intérieure (204) et la deuxième porte intérieure (206) ; et
un dispositif réagissant à la température (210) couplé à l'une ou aux deux des première porte intérieure (204) et deuxième porte intérieure (206),
dans lequel le dispositif réagissant à la température (210) est configuré pour être dans un premier état en dessous d'un seuil de température prédéterminé, et dans un second état au-dessus du seuil de température prédéterminé,
dans lequel le dispositif réagissant à la température (210) comprend un bouton conducteur (240) fixé à la grille (202) et une broche thermoplastique (250) s'étendant dans le bouton conducteur (240) et la deuxième porte intérieure (206), la broche thermoplastique (250) étant configurée pour fondre au seuil de température prédéterminé, et
dans lequel le dispositif réagissant à la température (210) est configuré de telle sorte que, lorsque le dispositif réagissant à la température (210) est dans le premier état, le dispositif réagissant à la température (210) maintient la première porte (204) et la deuxième porte (206) dans une position ouverte pour procurer le ou les canaux d'air (214),
et lorsque le dispositif réagissant à la température (210) passe au deuxième état, la deuxième porte intérieure (206) s'abaisse par rapport à la première porte intérieure (204) pour désaligner les ouvertures (212, 213) et fermer le ou les canaux d'air (214).

2. Porte (120) selon la revendication 1, dans laquelle le dispositif réagissant à la température (210) comprend un lien fusible en alliage eutectique.

3. Véhicule comprenant :
une cabine interne ; et
un espace clos à l'intérieur de la cabine interne, l'espace clos incluant une porte (120) selon la revendication 1 ou la revendication 2.

4. Véhicule selon la revendication 3, dans lequel le véhicule est un aéronef (10),

5. Véhicule selon la revendication 3 ou 4, dans lequel l'espace clos est des toilettes (100).

6. Procédé pour éteindre un incendie dans un espace clos à l'intérieur d'une cabine interne d'un véhicule, l'espace clos incluant une porte (120) présentant une grille (202) et un système d'extinction d'incendie (200) couplé à la grille (202),
le système d'extinction d'incendie (200) comprenant une première porte intérieure (204) et une deuxième porte intérieure (206) couplée à la première porte intérieure (204), dans lequel la première porte intérieure (204) est une porte fixe et immobile ; la deuxième porte intérieure (206) étant agencée de manière à être déplaçable par rapport à la première porte intérieure (204) ; et les première et deuxième portes intérieures (204, 206) incluant des ouvertures (212, 213) qui s'alignent pour définir un ou plusieurs canaux d'air (214) à travers celles-ci ;
le système d'extinction d'incendie (200) comprenant en outre des canaux de guidage latéraux (208) formés dans des rails latéraux qui supportent à la fois la première porte intérieure (204) et la deuxième porte intérieure (206) ; et
le procédé comprenant les étapes consistant à :
maintenir un dispositif réagissant à la température (210) dans un premier état en dessous d'un seuil de température prédéterminé, dans lequel la deuxième porte intérieure (206) est couplée de manière déplaçable au dispositif réagissant à la température (210) ;
faire passer le dispositif réagissant à la température (210) dans un deuxième état au-dessus du seuil de température prédéterminé ; et
en réponse à ladite transition, permettre à la deuxième orte intérieure (206) de descendre par rapport à la première porte intérieure (204) afin de désaligner les ouvertures (212, 213) et de fermer un ou plusieurs canaux d'air (214) définis à travers la première porte intérieure (203) ou la deuxième porte intérieure (206) lorsque le dispositif réagissant à la température (210) est dans le premier état,
dans lequel le dispositif réagissant à la température (210) comprend un bouton conducteur (240) fixé à la grille (202) et une broche thermoplastique (250) s'étendant dans le bouton conducteur (240) et la deuxième porte intérieure (206), la broche thermoplastique (250) étant configurée pour fondre au seuil de température prédéterminé.

7. Procédé d'extinction d'incendie selon la revendication 6, dans lequel des toilettes (100) incluent la porte (120).

8. Procédé d'extinction d'incendie selon la revendication 6 ou 7, dans laquelle le dispositif réagissant à la température (210) comprend un lien fusible en alliage eutectique.
